Europäisches Patentamt

European Patent Office

Office européen des brevets

(19)

(11) Veröffentlichungsnummer: **0 239 654**
**B1**

(12)
# EUROPÄISCHE PATENTSCHRIFT

(45) Veröffentlichungstag der Patentschrift:
31.01.90

(21) Anmeldenummer: 86104369.3

(22) Anmeldetag: 29.03.86

(51) Int. Cl.⁴: **A43B 23/08,** B32B 27/00,
B29B 15/10, B29C 67/14
// B29D9/00

(54) **Versteifungsmaterial mit Schmelzklebereigenschaften und seine Herstellung.**

(43) Veröffentlichungstag der Anmeldung:
07.10.87 Patentblatt 87/41

(45) Bekanntmachung des Hinweises auf die Patenterteilung:
31.01.90 Patentblatt 90/5

(84) Benannte Vertragsstaaten:
AT BE CH DE FR GB IT LI LU NL SE

(56) Entgegenhaltungen:
DE-A- 2 551 233
GB-A- 454 646
US-A- 2 709 310
US-A- 2 840 492
US-A- 3 778 251
US-A- 4 104 340

(73) Patentinhaber: Giulini Chemie GmbH,
Giulinistrasse 2 Postfach 150 480,
D-6700 Ludwigshafen/Rhein(DE)

(72) Erfinder: Brehmer, Harald, Dipl.-Ing., Rottstrasse 15b,
D-6701 Neuhofen(DE)
Erfinder: Wilding, Emil, Sudetenstrasse 1,
D-6701 Birkenheide(DE)

**Beschreibung**

Gegenstand der vorliegenden Erfindung ist ein neuartiges Versteifungsmaterial mit Schmelzklebereigenschaften für Schuhe und Schuhteile sowie ein Verfahren zu seiner Herstellung.

Schuhversteifungsmaterial sind schon sei langem bekannt. Zweckmäßigerweise werden sie in Bahnform hergestellt und in daraus hergestellten Zuschnitten zum Versteifen des Fersenbereiches, gegebenenfalls auch Spitzenbereiches, verwendet. Unter Einwirkung von Lösungsmitteln oder Hitze können die Zuschnitte dann verformt und mit dem Schaft und/oder Futtermaterial in Schuh verklebt werden. Nach Verformung und Abkühlung bzw. Verdampfung des Lösungsmittels soll das Versteifungsmaterial sowohl eine gute Formhaltung als auch eine gute Flexibilität des Formlings gewährleisten.

Lösungsmittelaktivierbares Versteifungsmaterial ist beispielsweise Gegenstand der US-PS 2 840 492. Das dort beschriebene und über Jahre mit Erfolg eingesetzte Versteifungsmaterial besteht aus einem Fasermaterial, das mit einer Mischung, bestehend aus Polystyrol und einem Styrol - Butadien - Copolymerisat, imprägniert worden ist. Ein wesentliches Kennzeichen dieses Materials besteht darin, daß der Styrolgehalt im Copolymerisat größer als 50 Gew.% ist und das Verhältnis Styrol zu Butadien in der gesamten Mischung nicht kleiner als 75 : 25 ist, jedoch auch nicht größer als 95 : 5. Wichtig ist ferner, daß die auf das Fasermaterial ausgebrachten Polymerteilchen nicht oder nur im geringen Ausmaß verfilmt sind, d.h. nicht miteinander oder nur im geringen Ausmaß miteinander verschmolzen sind. Das hat zur Folge, daß das flüssige Lösungsmittel rasch in das Versteifungsmaterial eindringen kann und das Versteifungsmaterial schnell weich wird.

Zuschnitte aus einem derartigen Material lassen sich mit einem flüssigen organischen Lösungsmittel weich machen und anlösen, so daß sie im lösungsmittelhaltigen Zustand verformbar und verklebbar sind.

Ein Nachteil dieses Versteifungsmaterial wird nun darin gesehen, daß optimale Bedingungen für die Lösungsmittelaktivierung kaum oder nur mit großem Aufwand hergestellt werden können. Die Verarbeitung von mit Lösungsmitteln getränktem Versteifungsmaterial ist unsauber, in vielen Fällen toxisch und vor allem auch zeitraubend. Außerdem ist das Timing beim Verpressen und Aufleisten kritisch.

In der OE-PS 205 887 wird weiterhin ein biegsames Material zum Versteifen von Schuhkappen vorgeschlagen, das erst nach der Verformung durch Behandlung mit Härtungsmitteln gehärtet, d.h. versteift wird. Demnach kann das Material in der Weise hergestellt werden, daß beispielsweise eine Mischung aus löslichen härtbaren Stoffen, die erst nachträglich gehärtet werden und nicht härtbaren Polymerisaten auf der Basis von Polyvinylchlorid, Polyvinylacetat, Polystyrol u.a. auf einen faserigen Trägerstoff, auf dem ein Gewebegitter angeordnet ist, eingelagert werden. Als härtbare Stoffe werden natürliche Leime und härtbare Kunstharzvorkondensate genannt, z.B. solche auf Harnstoff-Formaldehydba̓sis. Ein so hergestelltes Material ist nach der Trocknung flexibel und lagerfähig. Nach Bestreichen oder Tauchen in eine Härtelösung werden die ausgestanzten Vorder- bzw. Hinterkappen in den Schuh eingebracht und bei Raumtemperatur gehärtet.

Gegenüber einem mit Lösungsmitteln aktivierbarem Versteifungsmaterial zeigt das biegsame Material gemäß der OE-PS 205 887 besonders den Vorteil, daß die Einformung in das zu versteifende Endprodukt, z.B. Fersen- oder Spitzenbereich wegen seiner Flexibilität problemlos ist und die Versteifung erst nach der Einformung stattfindet.

Wie sich jedoch gezeigt hat, sind auch diese Versteifungsmaterialien in vielen Fällen noch nicht zufriedenstellend, insbesondere ist die Verklebung oft mangelhaft.

Schließlich wird in der US-PS 3 778 251 noch vorgeschlagen, die bei der Verarbeitung von lösungsmittelaktivierbaren Versteifungsmaterial auftretenden Schwierigkeiten dadurch zu eliminieren, daß als Versteifungsmaterialien in der Schuhindustrie nur solche eingesetzt werden, die aus einem Trägermaterial bestehen, das mit einem Imprägniermittel aus einem thermoplastischen Material versehen ist, dessen Teilchen nicht oder nur in einem sehr geringen Umfang verfilmt sind, und das mindestens auf einer Seite eine Polycaprolactonschicht aufweist. Ein derartiges Material ist bei Raumtemperatur fest und nicht klebrig. Es ist thermisch aktivierbar, so daß die Lösungsmittelaktivierung entfällt. Polycaprolacton schmilzt bekanntlich bei einer Temperatur zwischen 60 und 182°C, insbesondere zwischen 79,4 und 121°C, und der Erweichungspunkt liegt zwischen 60 und 82°C. Die Polycaprolactonschicht ist verfilmt.

Nach einer besonders günstigen Ausführungsform der US-PS 3 778 251 wird das imprägnierte Material beidseitig mit Polycaprolactonschichten versehen. Das soll den Vorteil haben,daß bei der thermischen Aktivierung das Versteifungsmaterial sowohl biegsam bleibt bzw. wird als auch mit dem Innenfutter und Oberleder verklebbar. Die Polycaprolactonschichten sind im Gegensatz zum imprägnierten Material verfilmt.

In der Praxis hat sich jedoch gezeigt, daß die nach der vorstehenden US-PS hergestellten Versteifungsmaterialien bei der Verarbeitung in der Schuhindustrie noch wesentliche Nachteile zeigen. So hat sich gezeigt, daß Zuschnitte aus diesem Material beim Einlegen und Anformen erhebliche Schwierigkeiten bereiten; die Polycaprolactonschichten versteifen nämlich das imprägnierte Trägermaterial in vielen Fällen so stark, daß bereits beim Einlegen und Anformen der Zuschnitte die Schmelztemperatur des Polycaprolactons überschritten werden muß. Mit anderen Worten: Der Heißschmelzkleber Polycaprolacton ist bereits während des Einlegens und während der Anformung flüssig, verklebt also das Versteifungsmaterial bereits vor dem Erreichen der ausgeformten Position mit dem Innenfutter und dem Oberleder. Das führt in den meisten Fällen zur Ausbildung sogenannter "Taschen" im Fersenbogenbereich.

Versuche, die eben geschilderten Schwierigkeiten durch Anwendung besonders dünner Polycaprolactonschichten zu beseitigen, müssen als erfolglos bezeichnet werden. Wie sich gezeigt hat, reicht in solchen Fällen die Polycaprolactonmenge nicht aus, um sowohl das imprägnierte Trägermaterial zu verfestigen (versteifen) als auch die Verklebung mit dem Schaftmaterial (Innenfutter und Oberleder) herbeizuführen.

Es stellt sich somit die Aufgabe, ein Versteifungsmaterial zu finden, das beidseitig mit Heißschmelzkleber versehen ist, jedoch vor der Aktivierung des Heißschmelzklebers gut verformbar ist und erst bei der Aktivierung des Klebers seine Versteifungseigenschaften erhält.

Die Lösung der gestellten Aufgabe basiert auf der Erkenntnis, daß die aufgezeigten Schwierigkeiten dadurch beseitigt werden können, wenn es gelingt, ein Versteifungsmaterial zu finden, das unterhalb der Aktivierungstemperatur des Heißschmelzklebers hohe Flexibilität zeigt, also gut verformbar ist, und das erst beim Erreichen der Aktivierungstemperatur durch Eindringen des Heißschmelzklebers in das nicht oder nur unvollständig verfilmte Trägermaterial nach Abkühlung steif bzw. steifelastisch wird.

Das neue Schuhversteifungsmaterial, das aus einem Trägermaterial besteht, das beidseitig, mit einer Heißschmelzkleberschicht versehen ist, ist dadurch gekennzeichnet, daß das Trägermaterial und die Heißschmelzkleberschichten nicht oder nur unvollständig verfilmt sind. Bei Einhaltung dieser Bedingungen bleibt das Versteifungsmaterial bis zum Erreichen der Aktivierungstemperatur flexibel.

Das Gewichtsverhältnis von Trägermaterial zu Heißschmelzkleber liegt mit Vorteil zwischen 3 : 1 und 1 : 1, insbesondere zwischen 1,8 : 1 und 2,2 : 1, bezogen auf das Trockengewicht. Erwähnenswert ist an dieser Stelle, daß der Gegenstand der Erfindung auf das vorstehende Gewichtsverhältnis jedoch nicht beschränkt ist.

Als Trägermaterial können sowohl Gewebe- als auch Vlieseinlagen verwendet werden, die aus natürlichen oder künstlichen Fasern oder Gemischen daraus bestehen. Eine Imprägnierung des Trägermaterials ist nicht unbedingt erforderlich, kann aber gemäß einer vorteilhaften Ausführungsforms der Erfindung durchgeführt werden. Nicht imprägnierte Trägermaterialien führen zu besonders gut verformbaren und besonders gut einlegbaren Versteifungsmaterialien.

Imprägnierung des Trägermaterials erfolgt in an sich bekannter Weise mit einer wäßrigen Polymerisat- oder Copolymerisatdispersion bzw. Mischungen davon. Der Feststoffgehalt der wäßrigen Dispersionen liegt zweckmäßigerweise zwischen 35 und 50 Gew.%. Polystyrol. Copolymerisate aus Styrol oder Vinylacetat, insbesondere solche aus 70 bis 95 Gew.% Styrol und 30 bis 5 Gew.% Butylacrylat oder 30 bis 5 Gew.% Butadien sind gut geeignet. Auch können Copolymerisate aus Vinylacetat und Vinylchlorid, insbesondere in Mischung mit Polystyrol, eingesetzt werden, beispielsweise eine Mischung aus 70 bis 95 Gew.% Polystyrol und 30 bis 5 Gew.% eines Copolymerisates aus Vinylacetat und Vinylchlorid.

Als Heißschmelzkleber wird bevorzugt Polycaprolacton eingesetzt, insbesondere Mischungen von Polycaprolacton mit unterschiedlichem Molekulargewicht. Geeignet sind Mischungen aus 60 bis 95 Gew.% Polycaprolacton mit einem MG von etwa 45000 und 40 bis 5 Gew.% Polycaprolacton mit einem MG von etwa 35000. Selbstverständlich ist der Erfindungsgegenstand nicht auf die vorstehende Mischung beschränkt. Durch die Auswahl von Polycaprolactonmischungen mit Polymerteilchen unterschiedlichen Molekulargewichts kann die Schmelzviskosität und damit die Schmelztemperatur beeinflußt werden, insbesondere optimiert werden. Weiterhin kann dadurch neben der guten Versteifung (Einfließen der Schmelzklebers) eine gute Endverklebung sichergestellt werden.

Gemäß einer weiteren Ausführung der Erfindung können die Heißschmelzkleber auch auf beiden Seiten des Trägermaterials unterschiedliche Schmelzviskositäten aufweisen. Dadurch ist eine Verarbeitung, z.B. Verklebung auch bei unterschiedlichen Temperaturen der beiden Materialseiten möglich. So kann z.B. die der Hitzequelle abgewandte Seite des Zuschnittes auch bei niederigeren Temperaturen verklebt werden.

Die Herstellung des neuen Schuhversteifungsmaterials erfolgt derart, daß das Trägermaterial zunächst auf 50 bis 80°C erwärmt, z.B. mit IR-Strahlen, und dann beidseitig mit pulverförmigem Heißschmelzkleber beschichtet wird. Nach erfolgter Anschmelzung und Fixierung des Heißschmelzkleberpulvers wird dann die Warenbahn unter gleichzeitiger Kühlung geglättet. Die Korngrößenverteilung des Klebers liegt zwischen 0 und 500 µm.

Anhand der nachstehenden Beispiele wird nun der Erfindungsgegenstand noch näher erläutert.

Beispiel 1

Ein beidseitig gerauhtes Gewebe in Leinwandbindung, bestehend aus einer Mischung von Baumwolle und Polyesterfasern mit einem Flächengewicht von 200 g/m², wurde mit einer wäßrigen Dispersion aus einem Copolymerisat von Styrol und Butylacrylat (Styrolanteil ca. 90%) imprägniert und auf ein Trockengewicht von 600 g/m² gebracht. Durch geeignete Trocknungsbedingungen, insbesondere Trockentemperaturen von etwa 100 bis 110°C, wurde sichergestellt, daß das polymere Imprägniermittel nur unvollständig verfilmt wurde. Die so hergestellte - unverfestigte - Innenbahn wurde nun beidseitig mit einem Pulvergemisch, bestehend aus Polycaprolacton, in der Korngrößenverteilung 0 bis 500 µm besohichtet. Das Polycaprolacton war ein Gemisch aus

90 Gew.% Molekulargewicht 45000
und
10 Gew.% Molekulargewicht 35000.

Das Aufschmelzen und Glätten des Pulvers wurde so durchgeführt, daß eine Filmbildung sowohl in der Innenbahn als auch bei der Pulverbeschichtung vermieden wurde. Das erzeugte "Versteifungsmaterial" wurde in Kappenform ausgestanzt und am oberen Rand geschärft. Die vorbereitete Hinterkappe wurde dann in die Kappentasche eines Schuhschaftes eingeschoben und im Fersenbereich auf einer 80°C heißen Aluminiumform mit einer handwarmen Silicongegenform während der Dauer von 12 Sec. ausgeformt. In dem druck- und wärmebehandelten Bereich war nun das Versteifungsmaterial steifelastisch ausgeformt und mit den Schaftmaterialien verklebt. Der Bereich welcher nicht druck- und wärmebehandelt war, blieb noch unverklebt und gut verformbar. Zum Schluß wurde der Schaft auf den Originalleisten aufgesetzt und den üblichen "Zwickprozessen" unterzogen. Die bisher nicht druck- und wärmebehandelten Partien wurden nun beim Durchlauf durch den Heatsetter-Tunnel bei 120°C 5 Min. verfestigt und verklebt.

Beispiel 2

Ein Polyesternadelvlies aus Polyester-Stapelfasern mit einer Stapellänge von ca. 40 mm und einem Titer von 1,7 dtex wurde beidseitig mit pulverförmigem Polycaprolacton (Molekulargewicht ca. 45000) in einer Korngrößenverteilung 0-500 µm wie im Beispiel 1 beschichtet. Das weiche und flexible "Versteifungsmaterial" wurde nun in der Stepperei beim Zusammennähen des Schuhschafts im Fersenbereich mit eingenäht. Der Schuhschaft wurde dann so montiert als ob keine Hinterkappe vorhanden wäre. Beim "Heatsetterdurchlauf" (5 Min. 130°C)durchdrang die Außenbeschichtung aus Polycaprolacton das Vliesgebilde völlig und verklebte gleichzeitig mit Futter und Oberleder. Nach dem Abkühlen war eine steifelastische Fersenpartie entstanden.

Beispiel 3

Ein verfestigtes Polyesterspinnvlies (vernadelt) mit einem Flächengewicht von ca. 80 g/m² und einem Titer von ca. 2,5 dtex, wurde auf einer Laborimprägniermaschine mit einer ca. 50 %igen wäßrigen Dispersion aus einem Styrol-Butadien-Copolymerisat mit einem Butadiengehalt von ca. 10% auf ein Totalgewicht von 300 g/m² (trocken) imprägniert und durch geeignete Trocknungsbedingungen nur unvollständig verfestigt.

Auf die noch ca. 80°C heiße Bahn wurde nach dem Trockenkanal ein Pulvergemisch aus Polycaprolacton in einer Korngrößenverteilung von 0-500 µm aufgetragen, und zwar ca. 130 g/m². Das Pulvergemisch bestand zu 60% aus Polycaprolacton mit einem Molekulargewicht von ca. 45000 und zu 40% aus Polycaprolacton mit einem Molekulargewicht von 35000. Dieses Pulvergemisch sinterte nun durch die noch vorhandene Wärme auf dem Bahnmaterial an, ohne einen Film zu bilden und diese dadurch zu versteifen. Das so behandelte Material wurde nach dem Abkühlen aufgewickelt. Nachdem etwa die Hälfte des Trägermaterials derart behandelt worden war, wurde die Warenbahn abgeschnitten und auf einer zweiten Wickelstelle neu angelegt und über einen Kaschierkalander auf die jetzt laufende Ware derart zukaschiert, daß die bisher nicht beschichtete Seite mit der heißen Kleberseite verklebt wurde. Das Laminat wurde nun nach Abkühlen aufgewickelt. Die jetzt noch nicht pulverbeschichtete Warenunterseite wurde anschließend separat noch mit demselben Pulvergemisch, jedoch nur ca. 70 g/m² unter Wahrung derselben Kriterien beschichtet. Nach dem Abkühlen wurde wieder aufgewickelt und anschließend in Plattenformat geschnitten und zehnfach geheftet. Aus dem Plattenmaterial wurden mit einem Stanzmesser Hinterkappen ausgestanzt. Nach dem "Schärfen" der Ränder wurde die so erzeugte Hinterkappe wie im Beispiel 1 in einen Schaft eingearbeitet.

Patentansprüche

1. Schuhversteifungsmaterial, bestehend aus einem Trägermaterial, das beidseitig mit einer Heißschmelzkleberschicht versehen ist, dadurch gekennzeichnet, daß das Trägermaterial und die Heißschmelzkleberschichten nicht oder nur unvollständig verfilmt sind.

2. Schuhversteifungsmaterial nach Anspruch 1, dadurch gekennzeichnet, daß das Gewichtsverhältnis Trägermaterial zu Heißschmelzkleber 3 : 1 bis 1 : 1, insbesondere 1,8 : 1 bis 2,2 : 1, beträgt.

3. Schuhversteifungsmaterial nach den Ansprüchen 1 und 2, dadurch gekennzeichnet, daß das Trägermaterial mit einem Imprägniermittel aus Polystyrol und/oder einem Copolymerisat aus Styrol oder Vinylacetat und/oder einer Mischung aus Polystyrol und einem Copolymerisat aus Styrol oder Vinylacetat versehen ist und die Polymerteilchen nicht oder nur unvollständig verfilmt sind.

4. Schuhversteifungsmaterial nach Anspruch 3, dadurch gekennzeichnet, daß das Copolymerisat aus 70 bis 95 Gew.% Styrol und 30 bis 5 Gew.% Butylacrylat besteht.

5. Schuhversteifungsmaterial nach Anspruch 3, dadurch gekennzeichnet, daß das Copolymerisat aus 70 bis 95 Gew.% Styrol und 30 bis 5 Gew.% Butadien besteht.

6. Schuhversteifungsmaterial nach Anspruch 3, dadurch gekennzeichnet, daß das Imprägniermittel aus einem Gemisch aus 70 bis 95 Gew.% Polystyrol und 30 bis 5 Gew.% eines Copolymerisates aus Vinylacetat und Vinylchlorid besteht.

7. Schuhversteifungsmaterial nach Anspruch 1, dadurch gekennzeichnet, daß die Heißschmelzkleberschicht aus Polycaprolacton besteht.

8. Schuhversteifungsmaterial nach Anspruch 7, dadurch gekennzeichnet, daß das Polycaprolacton eine Mischung aus 60 bis 95 Gew.% Polycaprolacton mit einem MG von 45000 und 40 bis 5 Gew.% Polycaprolacton mit einem MG von 35000 ist.

9. Verfahren zur Herstellung eines Schuhversteifungsmaterials nach der Ansprüchen 1 bis 8, dadurch gekennzeichnet, daß das Trägermaterial zunächst auf 50 bis 80°C erwärmt und beidseitig mit pulverförmigem Heißschmelzkleber beschichtet und nach Anschmelzung und Fixierung des pulverförmigen Klebers unter gleichzeitiger Kühlung geglättet wird.

10. Verfahren nach Anspruch 9, dadurch gekennzeichnet, daß das Trägermaterial vor dem Aufbringen des pulverförmigen Heißschmelzklebers mit der wäßrigen Dispersion eines thermoplastischen Kunststoffes imprägniert und so getrocknet wird, daß eine Filmbildung vermieden wird.

11. Verfahren nach Anspruch 10 dadurch gekennzeichnet, daß als thermoplastischer Kunststoff Polystyrol und/oder ein Copolymerisat aus Styrol oder Vinylacetat und/oder eine Mischung aus Polystyrol und einem Copolymerisat aus Styrol oder Vinylacetat eingesetzt wird.

12. Verfahren nach Anspruch 10, dadurch gekennzeichnet, daß als thermoplastischer Kunststoff ein Copolymerisat, bestehend aus 70 bis 95 Gew.% Styrol und 30 bis 5 Gew.% Butylacrylat eingesetzt wird.

13. Verfahren nach Anspruch 10, dadurch gekennzeichnet, daß als thermoplastischer Kunststoff ein Copolymerisat, bestehend aus 70 bis 95 Gew.% Styrol und 30 bis 5 Gew.% Butadien eingesetzt wird.

14. Verfahren nach Anspruch 10, dadurch gekennzeichnet, daß als thermoplastischer Kunststoff ein Gemisch aus 70 bis 95 Gew.% Polystyrol und 30 bis 5 Gew.% eines Copolymerisates aus Vinylacetat und Vinylchlorid eingesetzt wird.

15. Verfahren nach Anspruch 9, dadurch gekennzeichnet, daß als pulverförmiger Heißschmelzkleber Polycaprolacton eingesetzt wird.

16. Verfahren nach Anspruch 15, dadurch gekennzeichnet, daß eine Mischung, bestehend aus 85 bis 95 Gew.% Polycaprolacton mit einem
MG von 45000
und
15 bis 5 Gew.% Polycaprolacton mit einem MG von 35000
eingesetzt wird.

## Revendications

1. Matériau de renfort pour chaussures, constitué d'un matériau de support qui est pourvu, sur les deux faces, d'une couche de colle à fusion à chaud, caractérisé en ce que le matériau de support et les couches de colle à fusion à chaud ne sont pas transformés en film ou le sont seulement incomplètement.

2. Matériau de renfort pour chaussures selon la revendication 1, caractérisé en ce que le rapport en poids entre le matériau de support et la colle à fusion à chaud est de 3:1 à 1:1 et, plus particulièrement, de 1,8:1 à 2,2:1.

3. Matériau de renfort pour chaussures selon les revendications 1 et 2, caractérisé en ce que le matériau de support est pourvu d'un produit d'imprégnation à base de polystyrène et/ou d'un copolymère de styrène ou d'acétate de vinyle et/ou d'un mélange de polystyrène et d'un copolymère de styrène ou d'acétate de vinyle, et que les particules de polymères ne sont pas transformées en film ou le sont seulement incomplètement.

4. Matériau de renfort pour chaussures selon la revendication 3, caractérisé en ce que le copolymère est constitué de 70 à 95% en poids de styrène et de 30 à 5% en poids d'acrylate de butyle.

5. Matériau de renfort pour chaussures selon la revendication 3, caractérisé en ce que le copolymère est constitué de 70 à 95% en poids de styrène et de 30 à 5% en poids de butadiène.

6. Matériau de renfort pour chaussures selon la revendication 3, caractérisé en ce que le produit d'imprégnation est constitué d'un mélange de 70 à 95% en poids de polystyrène et de 30 à 5% en poids d'un copolymère d'acétate de vinyle et de chlorure de vinyle.

7. Matériau de renfort pour chaussures selon la revendication 1, caractérisé en ce que la couche de colle à fusion à chaud est constituée de polycaprolactone.

8. Matériau de renfort pour chaussures selon la revendication 7, caractérisé en ce que le polycaprolactone est un mélange de 60 à 95% en poids de polycaprolactone ayant un poids moléculaire de 45000 et de 40 à 5% en poids de polycaprolactone ayant un poids moléculaire de 35000.

9. Procédé de fabrication d'un matériau de renfort pour chaussures selon les revendications 1 à 8, caractérisé en ce que le matériau de support est chauffé tout d'abord à 50 à 80°C et est revêtu sur les deux faces d'une colle à fusion à chaud sous forme de poudre et que, après fusion et fixation de la colle en poudre, un relissage est effectué avec refroidissement simultané.

10. Procédé selon la revendication 9, caractérisé en ce que le matériau de support est imprégné avec une dispersion aqueuse d'une matière thermoplastique avant l'application de la colle à fusion à chaud en forme de poudre et est séché de façon à empêcher la formation d'un film.

11. Procédé selon la revendication 10, caractérisé en ce que l'on utilise comme matière thermoplastique du polystyrène et/ou un copolymère de styrène ou d'acétate de vinyle et/ou un mélange de polystyrène et d'un copolymère de styrène ou d'acétate de vinyle.

12. Procédé selon la revendication 10, caractérisé en ce que l'on utilise comme matière thermoplastique un copolymère constitué de 70 à 95% en poids de styrène et de 30 à 5% en poids d'acrylate de butyle.

13. Procédé selon la revendication 10, caractérisé en ce que l'on utilise comme matière thermoplastique un copolymère constitué de 70 à 95% en poids de styrène et de 30 à 5% en poids de butadiène.

14. Procédé selon la revendication 10, caractérisé en ce que l'on utilise comme matière thermoplastique un mélange de 70 à 95% en poids de polystyrène et de 30 à 5% en poids d'un copolymère d'acétate de vinyle et de chlorure de vinyle.

15. Procédé selon la revendication 9, caractérisé en ce que l'on utilise, comme colle à fusion à chaud sous forme de poudre, du polycaprolactone.

16. Procédé selon la revendication 15, caractérisé en ce que l'on utilise un mélange constitué de 85 à 95% en poids de polycaprolactone avec un poids moléculaire de 45000 et de 15 à 5% en poids de polycaprolactone, avec un poids moléculaire de 35000.

## Claims

1. Shoe stiffening material, consisting of a support material provided on both sides with a layer of hot melt adhesive, characterised in that the support material and the layers of hot melt adhesive are not converted or not completely converted to a film.

2. Shoe stiffening material according to claim 1, characterised in that the weight ratio of support material to hot melt adhesive is from 3:1 to 1:1, more particularly from 1.8:1 to 2.2:1.

3. Shoe stiffening material according to claims 1 and 2, characterised in that the carrier material is provided with an impregnating agent of polystyrene and/or a copolymer of styrene or vinylacetate and/or a mixture of polystyrene and a copolymer of styrene or vinylacetate and the polymer particles are not converted or only partly converted to a film.

4. Shoe stiffening material according to claim 3, characterised in that the copolymer consists of 70 to 95% by weight of styrene and 30 to 5% by weight of butyl acrylate.

5. Shoe stiffening material according to claim 3, characterised in that the copolymer consists of 70 to 95% by weight of styrene and 30 to 5% by weight of butadiene.

6. Shoe stiffening material according to claim 3, characterised in that the impregnating agent consists of a mixture of 70 to 95% by weight of polystyrene and 30 to 5% by weight of a copolymer of vinyl acetate and vinyl chloride.

7. Shoe stiffening material according to claim 1, characterised in that the layer of hot melt adhesive consists of polycaprolactone.

8. Shoe stiffening material according to claim 7, characterised in that the polycaprolactone is a mixture of 60 to 95% by weight of polycaprolactone with an MW of 45000 and 40 to 5% by weight of polycaprolactone with an MW of 35000.

9. Process for preparing a shoe stiffening material according to claims 1 to 8, characterised in that the support material is first heated to 50 to 80°C and coated on both sides with hot melt adhesive in powder form and after the powdered adhesive has been melted and fixed it is smoothed whilst simultaneously being cooled.

10. Process according to claim 9, characterised in that both the application of the powdered hot melt adhesive the support material is impregnated with the aqueous dispersion of a thermoplastic plastics material and dried in such a way that the formation of a film is prevented.

11. Process according to claim 10, characterised in that the thermoplastic plastics material used is polystyrene and/or a copolymer of styrene or vinyl acetate and/or a mixture of polystyrene and a copolymer of styrene or vinyl acetate.

12. Process according to claim 10, characterised in that the thermoplastic plastics material used is a copolymer consisting of 70 to 95% by weight of styrene and 30 to 5% by weight of butylacrylate.

13. Process according to claim 10, characterised in that the thermoplastic plastics material used is a copolymer consisting of 70 to 95% by weight of styrene and 30 to 5% by weight of butadiene.

14. Process according to claim 10, characterised in that the thermoplastic plastics material used is a mixture of 70 to 95% by weight of polystyrene and 30 to 5% by weight of a copolymer of vinylacetate and vinylchloride.

15. Process according to claim 9, characterised in that polycaprolactone is used as the powdered hot melt adhesive.

16. Process according to claim 15, characterised in that a mixture is used which consists of 85 to 95% by weight of polycaprolactone with an MW of 45000 and 15 to 5% by weight of polycaprolactone with an MW of 35000.